**Europäisches Patentamt**

**European Patent Office**

**Office européen des brevets**

(19)

(11) Veröffentlichungsnummer: **0 009 806**
**B1**

(12) **EUROPÄISCHE PATENTSCHRIFT**

(45) Veröffentlichungstag der Patentschrift: **25.07.84**

(51) Int. Cl.³: **H 01 G  4/30,  H 01 G  4/14**

(21) Anmeldenummer: **79103759.1**

(22) Anmeldetag: **02.10.79**

(54) Elektrischer Schichtkondensator und Verfahren zu seiner Herstellung.

(30) Priorität: **05.10.78 DE 2843581**

(43) Veröffentlichungstag der Anmeldung:
**16.04.80 Patentblatt 80/8**

(45) Bekanntmachung des Hinweises auf die Patenterteilung:
**25.07.84 Patentblatt 84/30**

(84) Benannte Vertragsstaaten:
**FR GB IT SE**

(56) Entgegenhaltungen:
**DE - B - 1 414 281**
**FR - A - 2 306 513**
**US - A - 3 330 696**

(73) Patentinhaber: **SIEMENS AKTIENGESELLSCHAFT**
**Berlin und München Wittelsbacherplatz 2**
**D-8000 München 2 (DE)**

(72) Erfinder: **Behn, Reinhard, Dipl.-Phys.**
**Frasdorferstrasse 6d**
**D-8000 München 90 (DE)**
Erfinder: **Pachonik, Horst, Dipl.-Phys.**
**Fasanenstrasse 197**
**D-8025 Unterhaching (DE)**
Erfinder: **Seebacher, Gerhard, Dr.**
**Bert-Brecht-Allee 10**
**D-8000 München 83 (DE)**

Courier Press, Leamington Spa, England.

## Beschreibung

Die Erfindung betrifft einen regenerierfähigen elektrischen Schichtkondensator, bei dem auf einem Trägerkörper aus Isolierstoff abwechselnd Metallschichten der Beläge und Isolierstoffschichten als Dielektrika übereinander angeordnet sind, bei dem die Metallschichten jeweils des einen Belages auf einer Seite des Kondensators und die des anderen Belages auf der anderen Seite des Kondensators über die Dielektrikumsschichten vorstehen und die vorstehenden Randbereiche der Metallschichten der Beläge ohne dazwischenliegenden Isolierstoff aufeinander angeordnet sind, bei dem die so gebildeten Randbereiche der Beläge mit Anschlußelementen elektrisch leitend verbunden sind und bei dem der Träger im Bereich der Randbereiche der Beläge Stirnflächen aufweist, die auf zwei gegenüberliegenden Seiten mit Metallschichten überzogen sind, sowie ein Verfahren zur Herstellung eines derartigen Kondensators.

Derartige Kondensatoren sind aus der FR—A—23 06 513 bekannt. Dabei werden die Metallflächen der Beläge so aufgedampft, daß sie den Trägerkörper einseitig umfassen. Dazwischen werden dielektrische Schichten angeordnet. Die Metallflächen werden im Bereich der Stirnflächen des Trägerkörpers durch Tauchen in flüssiges Metall verstärkt und mit Anschlußelementen versehen. Dieser Ausbau ergibt keine ausreichende Haftung der Anschlußelemente, da durch Legierungsbildung beim Tauchen und/oder durch die mechanische Belastung bei der Handhabung die sehr dünnen Metallflächen unterbrochen werden können.

Weiterhin ist aus der US—A—3330696 ein auf einem Trägerkörper angeordneter Siliciumoxidkondensator bekannt, der eine einzige Dielektrikumsschicht und zwei Metallschichten der Beläge besitzt. Die Beläge sind dadurch kontaktiert, daß auf einer kleinen Fläche von zumindest zwei gegenüberliegenden Stirnseiten eine Metallschicht aufgedampft ist. Auch bei diesem Kondensator tritt die Schwierigkeit auf, daß eine ausreichende Haftung der Anschluß elemente nicht gewährleistet ist.

Aus der DE—B—14 14 281 ist ein Verfahren zur Ausbildung geschlossener dielektrischer Schichten aus polymerem Material auf Träberkörpern bekannt, Die Herstellung dieser Glimmpolymerisationsschichten geschieht unter den Einfluß einer elektrischen Entladung aus einem Raum, der mit dem Dampf einer durch elektrische Entladung polymerisierbaren Verbindung erfüllt ist. Zur Herstellung sehr dünner Schichten werden Ionen des Dampfes auf einer in diesem Raum erzeugten Glimmentladung zur Polymerisation auf die Trägeroberfläche niedergeschlagen.

Die der vorliegenden Erfindung zugrunde liegende Aufgabe besteht darin, einen Kondensator der eingangs beschriebenen Art anzugeben, der hybridiergeeignet ist und bei dem mit geringem Aufwand eine sichere Kontaktierung und eine hohe Volumenkapazität erreicht ist, sowie ein Verfahren zur Herstellung eines derartigen Kondensators anzugeben.

Diese Aufgabe wird erfindungsgemäß dadurch gelöst, daß die Isolierstoffschichten aus Glimmpolymerisat bestehen, daß die Stirnflächen des Trägerkörpers mit einer aufkaschierten Folie aus hochschmelzendem Metall belegt sind, daß darauf eine Lotmetallschicht angeordnet ist und daß die vorstehenden Randbereiche der Beläge die Kanten zumindes teilweise überlappen.

Damit wird der Vorteil erzielt, daß die stirnseitigen Metallschichten die Ausdehnung des Kondensators nicht nennenswert vergrößern und daß die Belastung der Metallschichten, sowie des Trägerkörpers bei der Handhabung des Kondensators äußerst gering ist und somit die Dicke des Trägerkörpers ebenfalls relativ gering gewählt werden kann. Ein weiterer Vorteil des erfindungsgemäßen Kondensators besteht darin, daß er einfach zu verlöten und hybridierfähig ist. Eine ausreichende Hitzefestigkeit für das Hybridieren der Kondensatoren, beispielsweise mit einer reflow-Lötung, ist gewährleistet, weil die Dielektrikumsschichten aus Glimmpolymerisat bestehen. Durch die Verwendung von Glimmpolymerisat werden außerdem besonders vorteilhafte Werte der Kondensatordaten, insbesondere eine hohe Volumenkapazität und ein geringer Verlustfaktor, erreicht. Mit Dielektrika aus Glimmpolymerisat können außerdem einwandfrei regenerierende Kondensatoren hergestellt werden. Hierzu eignet sich ein Glimmpolymerisat von z.B. Cyclohexan.

Eine Weiterbildung der Erfindung besteht darin, daß der Trägerkörper in Richtung senkrecht zu den stirnseitigen Metallschichten einen zumindest annähernd rechteckförmigen Querschnitt aufweist.

Eine besonders sichere Kontaktierung ist bei einer Ausführungsform erreicht, bei der die stirnseitigen Metallschichten die entsprechenden Stirnflächen vollständig bedecken.

Dieser Vorschlag hat den Vorteil, daß die Kontaktschichten die Ausdehnung des Kondensators nicht nennenswert vergrößern und daß die Belastung der Kontaktschichten sowie des Trägers bei der Handhabung des Kondensators äußerst gering ist und somit die Dicke des Trägers ebenfalls relativ gering gewählt werden kann. Um eine einfach zu verlötende und sicher hybridierfähige Ausführungsform zu erreichen, sind die Stirnflächen mit einer ersten Schicht aus einem lötbaren, hochschmelzenden Metall und mit einer zweiten aus einem Lötmittel überzogen und die Randbereiche der Beläge überlappen die Kanten zumindest einer Kontaktschicht teilweise.

Die Zahl der übereinander angeordneten Schichten kann in einem weiten Bereich variiert werden. Vorteilhaft enthält der Kondensator etwa hundert Glimmpolymerisationsschichten und etwa hundert Aluminiumschichten, wobei die Aluminiumschichten eine Stärke von etwa 30 nm aufweisen. Diese Ausführungsform ist noch einwandfrei regenerierfähig und ermöglicht beispielsweise Kondensatorabmessungen von nur 3 mm x 1,3 mm x 1 mm. Die Dielektrikumsschichten können dabei weniger als 1 $\mu$m dick sein.

Das Verfahren zur Herstellung eines Kondensators der eingangs genannten Art ist erfindungsgemäß dadurch gekennzeichnet, daß auf eine isolierende Kunststoffplatte, deren Dicke der Breite eines Trägerkörpers entspricht, zu beiden Seiten eine Folie aus hochschmelzendem Metall aufkaschiert wird, daß auf diese beiden aufkaschierten Metallfolien je ein Überzug aus einem Lotmetall aufgebracht wird, daß die Kunststoffplatte dann in Streifen von der Dicke des im Kondensator benötigen Trägerkörpers zertrennt wird, daß auf die Schnittflächen Metall- und Glimmpolymerisationsschichten aufgebracht werden und daß dann die Einzelkondensatoren von den so gebildeten Kondensatorstreifen abgeschnitten werden.

Durch dieses Verfahren wird der Vorteil erzielt, daß eine einfache Herstellung einer großen Zahl der erfindungsgemäßen Kondensatoren ermöglicht wird.

Nach dem Aufbringen der Glimmpolymerisationsschichten und der Metallbeläge werden Anschlußdrähte in die Lotmetallschichten eingeschmolzen.

Besonders vorteilhaft ist es, wenn bei der Herstellung der Kondensatorstreifen durchgehende Belagsschichten aus Metall und Dielektrikumsschichten erzeugt werden und der Kondensatorstreifen in Einzelkondensatoren zerschnitten wird.

Als erste, hochschmelzende Kontaktschicht wird bevorzugt eine 35 $\mu$m dicke Kupferfolie aufkaschiert und darauf eine Zinnschicht aufgebracht. Diese reicht aus, um eine einwandfreie Verschaltung des Kondensators oder das Einlöten eines Anschlußdrahtes zu ermöglichen. Zur Herstellung von großen Mengen von Kondensatoren ist es vorteilhaft, wenn mehrere Trägerstreifen nebeneinander gelegt und gemeinsam mit Metall bedampft und durch Glimmpolymerisation beschichtet werden. Als Belagsmaterial eignet sich insbesondere Aluminium. Die Zinnschicht kann beispielsweise elektrogalvanisch oder durch ein Tauchbad aufgebracht werden. Vor dem Zerteilen der Kondensatorstreifen in Einzelkondensatoren kann zum Schutz der dielektrischen Schichten eine zusätzliche Isolierstoffolie oder eine Lackschicht aufgebracht werden. Als Material für den Träger eignet sich Epoxidharz, da dieser Kunststoff eine ausreichende Wärmebeständigkeit aufweist.

Eine einwandfreie, scharfe Begrenzung der aufgebrachten Schichten wird erreicht, indem die nicht zu beschichtenden Flächen durch Blenden abgedeckt werden und indem die Blenden möglichst nahe an die nicht zur beschichtenden Flächen herangebracht werden. Die ist insbesondere für die Herstellung der Polymerisationsschichten wichtig, da selbst geringe Schichtdicken in den zu kontaktierenden Randbereichen einen schlechten Kontakt hervorrufen würden. Die Abdeckung durch Blenden, die in unmittelbarer Nähe der zu beschichtenden Fläche liegen, ist auch bei der Herstellung der relativ dick auszubildenden Polymerisationsschichten möglich, da sich in der Nähe des Blendenrandes verjüngende Polymerisatschichten bilden. So können auch direkt auf den zu beschichtenden Oberflächen aufliegende Blenden ohne weiteres nach der Beschichtung entfernt werden. Dadurch können sehr genau begrenzte und deckungsgleich übereinanderliegende Schichten erzeugt werden, eine Fertigung mit sehr engen Toleranzen ist möglich.

Die Erfindung wird anhand von zwei Figuren näher erläutert. Sie ist nicht auf die in den Figuren gezeigten Beispiele beschränkt.

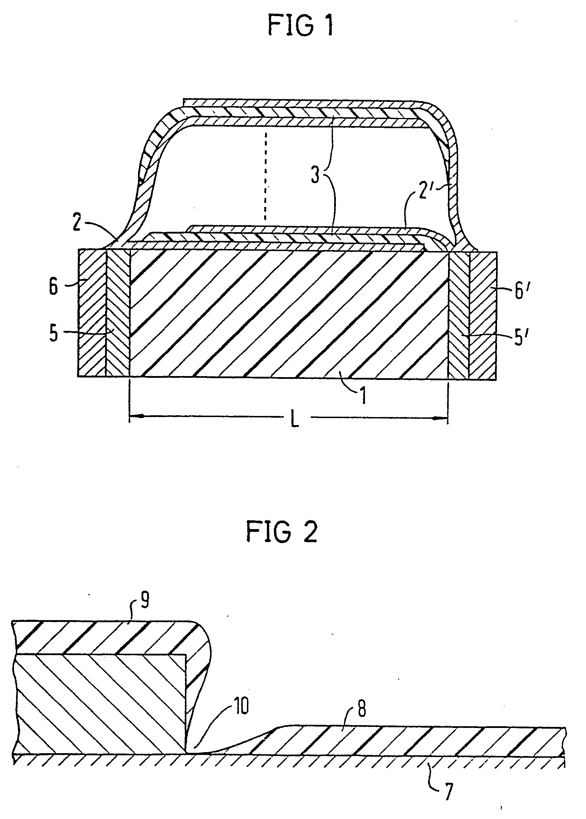

Fig. 1 zeigt einen erfindungsgemäßen Kondensator in geschnittener Ansicht schematisch.

Fig. 2 zeigt das Profil einer Glimmpolymerisatschicht in der Nähe einer Blende schematisch.

Ein Träger 1 aus Isolierstoff mit der im Kondensator gewünschten Breite L ist stirnseitig mit einer höherschmelzenden Metallschicht 5, 5' und einer Lotschicht 6, 6' beschichtet. Auf diesem Träger 1 sind jeweils einen Belag bildende Metallschichten 2 bzw. 2' angeordnet. Diese sind voneinander durch Glimmpolymerisationsschichten 3 getrennt. Die Metallschichten 2 bzw. 2' überlappen die Kanten der stirnseitigen Metallschichten 5 und 6 bzw. 5' und 6' teilweise.

Eine mit Glimmpolymerisat zu überziehende Fläche 7 ist teilweise durch eine Blende 9 abgedeckt. Die Glimmpolymerisatschicht 8 wird im Bereich der Kante 10 der Blende 9 dünner. Ihre Dicke geht gegen Null. Der Bereich der Beeinflussung durch die Blende entspricht in etwa der Dicke der Blende 9. Dadurch läßt sich die Blende 9 nach dem Aufbringen auch dicker Polymerisatschichten 8 ohne Schwierigkeiten abheben. Es tritt keine Ablösung der Glimmpolymerisatschichten 8 von der zu beschichtenden Oberfläche 7 auf.

## Patentansprüche

1. Elektrischer Schichtkondensator, bei dem auf einem Trägerkörper aus Isolierstoff abwechselnd Metallschichten der Beläge und Isolierstoffschichten als Dielektrika übereinander angeordnet sind, bei dem die Metallschichten jeweils des einen Belages auf einer Seite des Kondensators und die des anderen Belages auf der anderen Seite des Kondensators über die Dielektrikumsschichten vorstehen und die vorstehenden Randbereiche der Metallschichten der Beläge ohne dazwischenliegenden Isolierstoff aufeinander angeordnet sind, bei dem die so gebildeten Randbereiche der Beläge mit Anschlußelementen elektrisch leitend verbunden sind und bei dem der Trägerkörper im Bereich der Randbereiche der Beläge Stirnflächen aufweist, die auf zwei gegenüberliegenden Seiten mit Metallschichten überzogen sind, dadurch gekennzeichnet, daß die Isolierstoffschichten (3) aus Glimmpolymerisat bestehen, daß die Stirnflächen des Trägerkörpers (1) mit einer aufkaschierten Folie (5, 5') aus hochschmelzendem Metall belegt sind, daß darauf eine Lotmetallschicht (6, 6') angeordnet ist und daß die vorstehenden Randbereiche der Beläge (2, 2') die Kanten der aufkaschierten Folien (5, 5') zumindest teilweist überlappen.

2. Kondensator nach Anspruch 1, dadurch gekennzeichnet, daß der Trägerkörper (1) in Richtung senkrecht zu den stirnseitigen Metallschichten (5, 5'; 6, 6') einen zumindest annäherd rechteckförmigen Querschnitt aufweist.

3. Kondensator nach Anspruch 1 oder 2, dadurch gekennzeichnet, daß die stirnseitigen Metallschichten (5, 5'; 6, 6') die entsprechenden Stirnflächen vollständig bedecken.

4. Kondensator nach einem der Ansprüche 1 bis 3, dadurch gekennzeichnet, daß er etwa 100 Glimmpolymerisatschichten (3) und etwa 100 Aluminiumschichten (2, 2') enthält, und daß die Aluminiumschichten (2, 2') etwa 30 nm dick sind.

5. Verfahren zur Herstellung eines elektrischen Schichtkondensators nach einem der Ansprüche 1 bis 4, dadurch gekennzeichnet, daß auf eine isolierende Kunststoffplatte, deren Dicke der Breite L eines Trägerkörpers entspricht, zu beiden Seiten eine Folie eines hochschmelzenden Metalles aufkaschiert wird, daß auf diese beiden aufkaschierten Metallfolien je ein Überzug aus einem Lotmetall aufgebracht wird, daß die Kunststoffplatte dann in Streifen von der Dicke des im Kondensator benötigten Trägerkörpers zertrennt wird, daß auf die Schnittflächen Metall und Glimmpolymerisationsschichten aufgebracht werden und daß dann die Einzelkondensatoren von den so gebildeten Kondensatorstreifen abgeschnitten werden.

6. Verfahren nach Anspruch 5, dadurch gekennzeichnet, daß nach dem Aufbringen der Glimmpolymerisationsschichten und der Metallbeläge Anschlußdrähte in die Lötmetallschichten eingeschmolzen werden.

7. Verfahren nach Anspruch 5, dadurch gekennzeichnet, daß bei der Herstellung der Kondensatorstreifen durchgehende Belagsschichten aus Metall und Dielektrikumsschichten erzeugt werden und daß der Kondensatorstreifen in Einzelkondensatoren zerschnitten wird.

8. Verfahren nach einem der Ansprüche 5 bis 7 dadurch gekennzeichnet, daß eine 35 μm dicke Kupferfolie aufkaschiert wird und daß darauf eine Zinnschicht aufgebracht wird.

9. Verfahren nach einem der Ansprüche 5 bis 8, dadurch gekennzeichnet, daß mehrere Trägerstreifen nebeneinander gelegt und gemeinsam mit Metall bedampft und durch Glimmpolymerisation beschichtet werden.

10. Verfahren nach einem der Ansprüche 5 bis 9, dadurch gekennzeichnet, daß die nicht zu beschichtenden Flächen durch Blenden abgedeckt werden und daß die Blenden möglichst nahe an die nicht zu beschichtenden Flächen herangebracht werden.

## Revendications

1. Condensateur électrique à couches régénérable, dans lequel les couches métalliques des armatures et des couches en matériau isolant servant de diélectriques sont superposées de façon alternée sur un support en matériau isolant, et dans lequel les couches métalliques d'une armature sur une face du condensateur et les couches métalliques de l'autre armature sur l'autre face du condensateur font saillie par rapport aux couches diélectriques et les zones margines saillantes des couches métalliques des armatures sont superposées sans matériau isolant intercalaire, et dans lequel les zones marginales ainsi formées des armatures sont reliées d'une manière électriquement conductrice à des organes de raccordement, et dans lequel le support possède, dans la région des zones marginales des armatures, des surfaces frontales qui sont recouvertes par des couches métalliques sur deux faces opposées, caractérisé par le fait quie les couches en matériau isolant (3) sont constituées par un polymérisat obtenu sous effluve, et les faces frontales du support (1) sont recouvertes par une feuille plaquée (5, 5') constituée en un métal à point de fusion élevé, qu'une couche de métal de soudure (6, 6') est disposée sur cette feuille et que les zones marginales saillantes des armatures (2, 2') recouvrent au moins partiellement les bords des feuilles plaquées (5, 5').

2. Condensateur selon la revendication 1, caractérisé par le fait que le support (1) possède une section transversale approximativement rectangulaire suivant une direction perpendiculaire aux couches métalliques frontales (5, 5', 6, 6').

3. Condensateur selon la revendication 1 ou 2, caractérisé par le fait que les couches métalliques frontales (5, 5', 6, 6') recouvrent complètement les surfaces frontales correspondantes.

4. Condensateur suivant l'une des revendications 1 à 3, caractérisé par le fait qu'il contient environ 100 couches de polymérisat obtenu sous effluve (3), environ 100 couches d'aluminium (2, 2') et que les couches d'aluminium (2, 2') possèdent une épaisseur d'environ 30 nm.

5. Procédé pour fabriquer un condensateur électrique à couches suivant l'une des revendications 1 à 4, caractérisé par le fait qu'on réalise par placage sur les deux faces d'une plaque isolante en matière plastique, dont l'épaisseur correspond à la largeur du support, une feuille d'un métal possédant un point de fusion élevé, qu'on dépose sur ces feuilles métalliques plaquées des revêtements respectifs constitués en un métal de soudure, qu'on subdivise la plaque en matière plastique en bandes possédant l'épaisseur du support nécessaire dans le condensateur, qu'on dépose des couches métalliques et des couches obtenues par polymérisation sous effluve sur les faces de coupe et qu'on forme les différents condensateurs individuels par découpage des bandes de condensateur ainsi formées.

6. Procédé suivant la revendication 5, caractérisé par le fait qu'après le dépôt des couches obtenues par polymérisation sous effluve et des couches métalliques, on fixe par fusion des fils de raccordement dans des couches de métal de soudure.

7. Procédé suivant la revendication 5, caractérisé par le fait que lors de la fabrication des bandes de condensateur, on réalise des couches métalliques continues formant armature et des couches de diélectrique et qu'on subdivise les bandes de condensateur en condensateurs individuels.

8. Procédé suivant l'une des revendications 5 à 7, caractérisé par le fait qu'on dépose par placage une feuille de cuivre d'une épaisseur de 35 μm et qu'on dépose sur cette dernière une couche d'étain.

9. Procédé suivant l'une des revendications 5 à 8, caractérisé par le fait qu'on dépose côte-à-côte plusieurs bandes de support, qu'on y dépose en commun par évaporation un métal et qu'on les recouvre d'une couche par polymérisation sous effluves.

10. Procédé suivant l'une des revendications 5 à 9, caractérisé par le fait qu'on recouvre par des masques les surfaces ne devant pas être recouvertes d'une couche et qu'on rapproche les masques autant que cela est possible des surfaces ne devant pas être recouvertes d'une couche.

**Claims**

1. An electrical stacked capacitor, in which metal layers of the coatings and insulating layers as dielectric are arranged alternately one above another on a carrier body made of insulating material, wherein the metal layers of the first coating project beyond the dielectric layers at one side of the capacitor, whilst the metal layers of the other coating project beyond the dielectric layers on the other side of the capacitor, and the projecting end zones of the metal layers of the coatings are arranged one above another without any interposed insulating material, wherein the edge zones of the coatings which are formed in this way are electrically conductively connected to connection elements, and wherein, in the region of the end zones of the coatings, the carrier body has end faces which are covered with metal layers on two opposite sides, characterised in that the insulating layers (3) consist of a glow polymerisate; that the end faces of the carrier body (1) are covered with a foil (5, 5') which is laminated on and consists of a metal which has a high melting point, on which a soldering metal layer (6, 6') is in turn arranged; and that the projecting end zones of the coatings (2, 2') at least partially overlap the edges of the covering foils (5, 5').

2. A capacitor according to claim 1, characterised in that, in the direction at right angles to the end face metal layers (5, 5'; 6, 6'), the carrier body (1) has a cross-section which is at least approximately rectangular.

3. A capacitor according to claim 1 or claim 2, characterised in that the end face metal layers (5, 5'; 6, 6') completely cover the corresponding end faces.

4. A capacitor according to one of claims 1 to 3, characterised in that it contains about 100 glow polymerisate layers (3) and about 100 aluminium layers (2, 2'); and that the thickness of the aluminium layers (2, 2') is about 30 nm.

5. A process for the production of an electrical stacked capacitor according to one of claims 1 to 4, characterised in that a foil, consisting of a metal which has a high melting point, is laminated on to both sides of an insulating synthetic resin plate, the thickness of which corresponds to the width L of a carrier body; that a coating of a soldering metal is applied to both of these two covering metal foils; that the synthetic resin plate is then divided into strips whose thickness is equal to that of the carrier body required in the capacitor; that metal layers and glow polymerisation layers are applied to the cut surfaces, and that the individual capacitors are then cut from the capacitor strips which have been formed in this way.

6. A process according to claim 5, characterised in that, after the application of the glow polymerisation layers and the metal coatings, connection wires are fused into the soldering metal layers.

7. A process according to claim 5, characterised in that, during the production of the capacitor strips, continuous metal coating layers and dielectric layers are produced, and that the capacitor strip is cut up into individual capacitors.

8. A process according to one of claims 5 to 7, characterised in that a 35 μm-thick copper foil is applied by lamination and to this a tin layer is applied.

9. A process according to one of claims 5 to 8, characterised in that a plurality of carrier strips are arranged next to one another, commonly subjected to a vapour deposition of metal, and coated by glow polymerisation.

10. A process according to one of claims 5 to 9, characterised in that those surfaces which are not to be coated are covered by masks, and that the masks are brought as close as possible to the surfaces which are not to be coated.

# FIG 1

# FIG 2